# EUROPÄISCHE PATENTANMELDUNG

(11) **EP 0 645 898 A2**
(43) Veröffentlichungstag der Anmeldung: **29.03.1995**
(21) Anmeldenummer: 94114868.6
(22) Anmeldetag: 21.09.1994
(51) Int. Cl.: H04B 5/00, E05B 49/00

(54) **System zur kontaktlosen Daten- bzw. Energieübertragung**

(30) Priorität: 23.09.1993 DE 9314433 U
(71) Anmelder: SIEMENS AKTIENGESELLSCHAFT, D-80333 München (DE)
(72) Erfinder: Feldtkeller, Martin, Dipl.-Ing., D-81543 München (DE)

(57) **Zusammenfassung**

Das erfindungsgemäße System zur kontaktlosen Daten- bzw. Energieübertragung zwischen zwei Stationen mit jeweils einer in einer Station befindlichen Übertragungsspule weist ein Spulensystem auf, bei der die Spule um einen zylinderförmigen Körper angeordnet ist und eine innere und äußere Abschirmung vorgsehen ist, die miteinander und mit einem Anschluß der Spule in Verbindung stehen.

## Beschreibung

Die Erfindung betrifft ein System zur kontaktlosen Daten- bzw. Energieübertragung zwischen zwei Stationen mit jeweils einer in einer Station befindlichen Übertragungsspule.

Wird ein derartiges System z.B. im Kfz-Bereich für eine elektronische Wegfahrsperre verwendet, so ist die Basisstation Teil des Fahrzeugs und der Datenträger z.B. im Zündschlüssel integriert. Die Sendespule der Basisstation ist dann um den Schloßzylinder herum angeordnet bzw. darin integriert. Je nach Ausführungsform des Schloßzylinders wird die Induktivität der Spule verändert.

Aufgabe der vorliegenden Erfindung ist es ein System zur kontaktlosen Daten- bzw. Energieübertragung vorzugeben, bei dem die Induktivität der Spule möglichst konstant bleibt und gute elektromagnetische Verträglichkeit sowie kleine Abmessungen der Empfangsspule gewährleistet sind. Außerdem sollten bisherige Schloßanordnungen insbesondere im KFZ-Bereich unverändert bleiben.

Diese Aufgabe wird durch den kennzeichnenden Teil des Patentanspruchs 1 gelöst.

Die vorteilhafte Konfiguration erlaubt die Verwendung eines derartigen Systems in einem Kraftfahrzeug als Schlüssel/Schloß-System, z.B. für eine elektronische Wegfahrsperre.

Die Erfindung wird nachfolgend anhand von zwei Figuren näher erläutert.

Es zeigen
- Figur 1: eine perspektivische Darstellung eines erfindungsgemäßen Schlüsselschloßsystems,
- Figur 2: eine Aufsicht auf eine erfindungsgemäße Spule einer Basisstation.

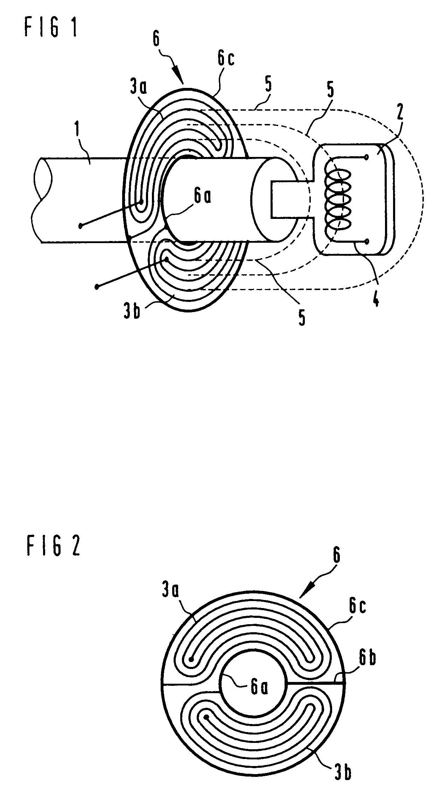

In Figur 1 ist z.B. ein Schlüsselschloßsystem perspektivisch dargestellt. Mit 1 ist ein Schloßzylinder dargestellt, um dessen Umfangsfläche eine aus zwei Teilspulen 3a, 3b bestehende Sende/Empfangsspule angeordnet ist. Beide Spulen 3a und 3b sind in Reihe geschaltet und so angeordnet, daß sie zueinander entgegengesetzte Magnetfelder erzeugen. Zur Verbindung der Spulen dient ein erfindungsgemäßer Abschirmring 6, der die Spule nach innen und außen abschirmt. Die Abschirmung 6 besteht aus einer äußerden Abschirmung 6c und einer inneren Abschirmung 6a, die über ein Teilstück 6b (siehe Figur 2) miteinander verbunden sind. Die Spule 3a umfaßt dabei die obere halbkreisförmige Schnittfläche des Schloßzylinders und die Spule 3b die untere halbkreisförmige Schnittfläche. Zusammen umschließen die beiden Spulen 3a und 3b den Schloßzylinder. Beide Spulen 3a und 3b liegen dabei vorzugsweise in einer Ebene. Figur 2 zeigt diese Ebene in einer Aufsicht auf eine derartige erfindungsgemäße Spule. Der eine Anschluß der Teilspule 3a ist mit der äußeren Abschirmung 6c verbunden und der eine Anschluß der Teilspule 3b mit der inneren Abschirmung 6a. Die jeweils anderen Anschlüsse bilden die Spulenanschlüsse.

Mit 2 ist in Figur 1 ein Schlüssel schematisch dargestellt, in dessen Innenraum eine Empfangsspule 4 vorgesehen ist. Geometrisch ist die Spule 4 im Schlüssel zwischen den beiden Teilspulen 3a, 3b des Schlosses angeordnet. Nachgeschaltete Auswerteschaltungen und Speicher sind in dieser Darstellung der Übersichtlichkeit halber nicht dargestellt. Die Spule 4 im Schlüssel 2 ist derart ausgerichtet, daß ihre Spulenachse senkrecht zu den Achsen der Teilspulen 3a und 3b steht. Auch durch Drehen des Schlüssels 2 im Zündschloß wird diese geometrische Zuordnung nicht verändert.

Die gestrichelten Linien 5 kennzeichnen die magnetischen Feldlinien, die von der Senderspule 3a, 3b erzeugt werden. Aufgrund der Abschirmung 6 wird eine geringe Abstrahlung aber auch eine geringe Einstrahlempfindlichkeit für Fernfelder gewährleistet. Daher ergibt sich eine gute elektromagnetische Verträglichkeit. Des weiteren wird die Induktivität der Sendespule durch das Zündschloß 1 durch die Abschirmung kaum mehr verändert. Auch bei den relativ großen Abständen bei einem derartigen System wird durch die erfindungsgemäße Anordnung eine gute magnetische Kopplung erreicht. Die erfindungsgemäße Anordnung kann auch bei einer einfachen Spule verwendet werden, jedoch muß das Verbindungsteilstück 6b dann von der Spule isoliert werden. Ein Anschluß der Spule kann dann mit dieser Abschirmung in Verbindung stehen.

## Patentansprüche

1. System zur kontaktlosen Daten- bzw. Energieübertragung zwischen zwei Stationen mit jeweils einer in einer Station befindlichen Übertragungsspule, bei der die Spule um einen zylinderförmigen Körper angeordnet ist,
**dadurch gekennzeichnet,** daß eine innere Abschirmung (6a) und eine äußere Abschirmung (6c) vorgesehen sind, die miteinander und mit einem Anschluß der Spule in Verbindung stehen.

2. System nach Anspruch 1,
**dadurch gekennzeichnet,** daß die Spule der ersten Station aus zwei in Reihe geschalteten Teilspulen besteht, daß die senkrecht dazu angeordnete Spule der zweiten Station zwischen den beiden Spulen angeordnet ist und daß die beiden Teilspulen zueinander entgegengesetzte Magnetfelder erzeugen, und daß die innere und äußere Abschirmung als Verbindungselement zur Verbindung der beiden Spulen dient.
